# EUROPEAN PATENT APPLICATION

(11) **EP 0 698 622 A1**
(43) Date of publication of application: **28.02.1996**
(21) Application number: 95305764.3
(22) Date of filing: 16.08.1995
(51) Int. Cl.: C08F 10/00, C08F 4/02

(54) **Oxide catalysts**

(30) Priority: 24.08.1994 GB 9417059
(71) Applicant: BP Chemicals Limited, London EC2M 7BA (GB)
(72) Inventor: Kneale, Brian, Sunbury-On-Thames, Middlesex, TW16 7LN (GB)
(74) Representative: Hymers, Ronald Robson

(57) **Abstract**

Catalyst particles containing transition metals comprise a support of (a) discrete particles of a first solid phase, comprising a first oxide, dispersed in a second solid phase comprising a second oxide.

Catalysts comprising a transition metal impregnated onto a support of silica dispersed in alumina may be prepared which are particularly suitable for use in the polymerisation of olefins.

## Description

The present invention concerns oxide catalysts, in particular to catalysts comprising oxide supports containing transition metals for use in polymerising olefins.

Transition metals such as chromium and titanium for use as catalyst are usually supported on oxide supports generally oxides having surface hydroxyl groups. Examples of such oxides are those of Groups IIA, IIIB, IVA and IVB of the Periodic Table, especially silicon, aluminium, magnesium, titanium, zirconium and hafnium. The Periodic Table to which reference is made herein is that in "Advanced Inorganic Chemistry" by F.A. Cotton and G. Wilkinson, Publ. Wiley 4th Ed. 1980. At least 2 oxides may be present either by impregnation of one oxide with a source of the other or by cogelling from precursors of both oxides. The oxides may be phosphated e.g. with phosphoric acid to give phospated aluminas with Al-OH and Al-O phosphate groups on their surfaces.

We have now discovered certain oxide catalyst particles, wherein the transition metal component is carried by a heterogeneous oxide support, each particle of said support comprising a matrix of a first oxide which contains discrete particles of a second oxide.

Thus the present invention comprises a catalyst particle comprising at least one transition metal component, each catalyst particle comprising a support of (a) discrete particles of a first solid phase which comprises at first oxide, in (b) at least a second solid phase comprising a second oxide.

The catalyst particles comprise discrete particles e.g. of silica, alumina and/or titania especially flame hydrolysed (or fumed), as one phase, and at least partly contiguous therewith a second phase comprising preferably silica and/or alumina. They are preferably made by producing a mixture of said discrete particles or a sol precursor thereof and a sol of precursor for the second phase, and then converting the mixture into particles and usually, after azeotroping with organic solvent, drying and calcining them.

The resulting composite catalyst particle is usually of 5-500 micron maximum diameter e.g. 40-250 micron while the discrete particles therein are usually in the range 1-50nm, such as 1-40 or 10-35nm, in their maximum dimension.

The porosity of the composite particles (as determined by experiments with nitrogen and BET studies using Cranston and Inkley calculations as are all porosities quoted herein), usually has at least one of the following values: most abundant pore diameter (MAPD) 20-1000 preferably 100-600 e.g. 150-500, or 20-150 such as 30-100 Angstrom units, mean pore diameter (MPD) 30-300 or 50-150, especially 60-130 Angstrom units, pore diameter at Median area (MED(A)) 20-200 or 30-150 e.g. 30-80 or 70-120 Angstrom units, pore diameter at median volume (MED(V)) 30-400 e.g. 40-100 or 80-200 Angstrom units pore volume (PV) 0.2-3g/ml, especially 0.2-1.5g/ml for composite particles in which the second phase is alumina and 0.7-3g/ml in particular or 1-2.5 or 1.5-2.5g/ml for composite particles in which the second phase comprises silica, surface area (A) of 100-900m/g especially 100-400m/g when the second phase is alumina and 400-800m/g when the second phase comprises silica, and an interquartile range (INT-Q) (from pore diameter at 75% pore volume minus the pore diameter at 25% pore volume) of 20-200, preferably 30-120 or 50-250 Angstrom units. A pore volume of at least 0.5g/ml, especially 0.7-3 and especially 1.5-2.5g/ml is particularly useful. The pore volume of the discrete particles is usually much less than that of the composite particle; the pore volume of the discrete particles can be obtained by porosity measurements on the discrete particles before preparation of the composite particle. The oxides in the discrete particles and second phase can be the same or different. The oxides are generally ones which in the solid form are capable of having surface hydroxyl groups.

The second phase may be made by gellation of a suitable precursor e.g. sodium silicate followed by drying and calcining, while the first phase discrete particles can be made by gellation drying and higher temperature calcining, or by flame treating the vapour phase hydrolysis product of a hydrolysable volatile precursor for the oxide, such as an ester or halide. The relative weights of discrete particles and second phase can be 5-95:95-5 e.g. 20-80:80-20, especially 30-70:70-30.

The oxides in discrete particles and the second phase are preferably mono di or sesquioxides of elements of Groups IIB, IIIA, IIIB, IVA and IVB of the Periodic Table or rare earth metals, preferably Al, Si, Ti, Zr, Hf, Th or mixtures thereof, while for the discrete particles the oxides may be of elements of Groups IIA, IIB, VA, VIA, VIIA or VIII, such as Mg, Zn, V, Cr, Mn, Fe, Co, Mi; Zn is preferably in a cogel when used in the second phase. The composite particles and/or the first and/or second phase may contain P, B and/or F, which may be applied to the discrete particles during or after their production or in or after the production of the second phase.

The catalyst particles of this invention comprise at least one transition metal and may be used for polymerisation of olefins, dehydrogenation of alkanes, cracking or isomerisation of hydrocarbons, Fischer Tropsch reactions or desulphurisation or deintrogenation of petroleum products e.g. crude hydrocarbon mixtures. The olefin polymerisation catalysts include Ziegler-Natta catalysts, chromium catalysts, metallocenes, etc. The transition metal may therefore be of Group IIIA, IVA, VA, VIA, VIIA, VIII, 1B, especially IVA VA or VIA e.g. Ti, Cr, V, Zr for olefin polymerisation and VIII e.g Fe, Co, Ni for /Fischer Tropsch reactions of carbon monoxide and hydrogen or VIII e.g. Pt or Pd, for dehydrogenation e.g. of alkanes to alkenes. The transition metal may be present in the composite particles as an impregnant or as part of its structure, at an average level of 0.1-20% such as 1-10%w/w. It may have been impregnated into the composite particle before or after calcination of the composite particles or into the discrete particles before mixing with the precursor for the second phase, or with that precursor and/or the precursor(s) for the discrete particles. The impregnation may be with the transition metal in an inert organic solvent. Examples of inert organic solvents are alcohols e.g. of 1-10 carbons such as propane, iso, sec or tert butanol, amyl alcohol and cyclohexanol and N containing compounds such as amines, amides and nitriles, such as N-methyl pyrolidone, pyridine, dimethyl formamide, formamide, acetonitrile, N,N-dialkylacetamide and triethylamine or mixtures of said N Compound and an aliphatic hydrocarbon optionally with at least one surfactant. However, preferred solvents are saturated aliphatic hydrocarbons e.g. of 5-15 carbons, saturated cycloaliphatic hydrocarbons e.g. of 5-8 carbons, and aromatic hydrocarbons e.g. of 6-14 carbon atoms and mixtures thereof; examples are n-hexane, n-heptane, toluene, benzene and cyclohexane. The organic solution is preferably anhydrous when the support, after precalcination, or the discrete particles after calcination is impregnated. Examples of suitable metal compounds are: inorganic salts such as chlorides; organic carboxylate derivatives, e.g. alkanoates with 1-10 carbons in each alkanoate group; complexes with carbonyl compounds, such as beta diketo complexes e.g. with acetylacetone or beta keto esters such as acetoacetic alkanol esters e.g. the ethanol ester; or esters such as with alkanols e.g. of 1-10 carbon atoms. Examples of such impregnants are chromium acetate, chromium bis acetylacetone di(tertbutyl) chromate, tetraalkyl titanates such as titanium tetra isopropoxide and triethanolamine titanate, titanium tetra chloride.

Instead of or as well as impregnation of a preformed composite or discrete particle the metal may be incorporated during the production of the first and/or second phase. This incorporation is usually via mixing with the precursors for the first or second phase, or impregnation of the discrete particle or composite before calcination, in both cases with an aqueous solution of the metal, or in the latter case optionally with metal in organic solvent, as described above. In or after the mixing of the precursors of the first or second phase, the transition metal is usually cogelled with the precursors. Suitable impregnants are aqueous solutions of halides e.g. chlorides of transition metals as such or as their amine complexes, or nitrate salts of the transition metals. Examples of such impregnants are titanous chloride, chromium chloride chromic acid, palladium or platinum amine chlorides, ferrous or ferric nitrate or chloride and nickel chloride.

The transition metal and/or and organic or inorganic P, B or F compound can also be mixed with the flame hydrolysable derivative to form the discrete particles.

In the above mentioned processes the transition metal has been added in a non organometallic form, i.e. free of any metal carbon bond. After incorporation the catalyst may be dried e.g. at 100-300°C and then if desired or required activated e.g. by heat in an oxidising atmosphere (for Cr compounds) or reducing atmosphere (for Co compounds) at 300-900°C for at least 5min e.g. 10min to 24hr. The activation may result in binding of the transition metal to the support.

The transition metal may be incorporated into the composite particle as an organometallic compound and in this case an inert dry solvent under an inert atmosphere e.g. of nitrogen is used. Suitable types of organometallic compounds are metal alkyls, or aryls or aralkyls or pi complexes with olefins whether acyclic and alicyclic, or an aromatic compound. The alkyl group may contain 1-20 carbons such as 4-16 carbons e.g. decyl or dodecyl, the aryl groups may contain 6-20 carbon atoms and be an aromatic hydrocarbyl group preferably a phenyl, naphthyl or anthracyl group, each of which may be substituted with 1-4 alkyl groups, each of 1-6 carbon atoms, and the aralkyl group may contain 7-21 carbon atoms and may be an aralkyl hydrocarbyl group preferably a benzyl or neophyl group (CH₂C(CH₃)₂C₆H₅). The olefins can be aliphatic e.g. of 3-10 carbons such as allyl or pentadienyl, optionally substituted with 1-5 alkyl groups each of 1-6 carbon atoms, or may be alicyclic e.g. of 5-18 carbons such as cyclopentadienyl, indenyl or fluorenyl, each optionally substituted by at least 1 such as 1-6 alkyl groups e.g. methyl. The aromatic compound forming an arene complex with the metal may be an aromatic hydrocarbon, preferably a benzene, naphthalene or anthracene molecule, each of which may be substituted with 1-4 alkyl groups each of 1-6 carbons.

Examples of suitable organometallic compounds are (i) optionally substituted chromium pentadienyl or cyclopentadienyl complexes, (ii) optionally substituted chromium arene complexes and (iii) Group IVA metal tetra aralkyls such as one described in GB-P-14828. Especially preferred are mixtures of at least (i) and/or (ii), together with (iii), as described as chromium complexes I(i) and/or (ii) and Gp IVA metal CH₂Ar or CH₂C(R⁷R⁸R⁹) complexes, in our European Patent Application EP 501672-A the relevant disclosure of which is hereby incorporated by reference. Most preferred are biscyclopentadienyl chromium, zirconium tetrabenzyl and bis (cumene) chromium and zirconium tetraneophyl.

After impregnation with the organometallic compound, the composite material is dried in an inert atmosphere, e.g. under reduced pressure and especially at less than 100°C. The impregnated composite material may be heat activated before use e.g. by heating in an inert non-oxidising atmosphere (e.g. of nitrogen or argon) preferably at less than 700°C for a period of at least 5 mins, especially 10 mins to 24hr and especially at 100-350°C; preferably however the impregnated composite material is not heat activated before use. During the impregnation especially but also the drying and/or heat activation the organometallic compound may react with hydroxyl groups of the composite particle to liberate hydrocarbon from the organo group. Thus the catalyst of the present invention contain at least one transition metal already in a catalytically active or may be convertible thereto by activation or addition of a cocatalyst.

The catalysts comprising a Group IVA, VA and/or VIA metal may be used in the polymerization of alpha olefins.

The present invention includes a process for the production of polyolefins, in particular homopolymers of ethylene of ethylene and copolymers of ethylene with minor amounts of at least one C₃ to C₁₀ e.g. C₃ to C₈ and especially C₃ to C₆ alpha-olefin, which process comprises contacting the monomer or monomers, optionally in the presence of hydrogen, with an olefin polymerisation catalyst according to the present invention and as hereinbefore defined at a temperature and pressure sufficient to initiate the polymerisation reaction. Examples of suitable C₃ to C₈ alpha olefins are propylene, butene-1, hexene-1, 4-methyl pentene-1 and octene-1; the alpha olefin may be present with the ethylene in amounts of 0.001-80% by weight (of the total monomers). The polymers or copolymers of ethylene thus obtained can have densities, in the case of homopolymers of about 0.95 to 0.96 or 0.965 or in the case of copolymers, as low as 0.920Kg/m3 or even lower. the C₃ to C₈ alpha-olefin content in the copolymers of ethylene can be about from 0.01% to 10% by weight or more. Preferably the monomer is ethylene and homopolymers are produced.

The supported olefin polymerisation catalyst according to the present invention may optionally be used in the presence of one or more organometallic co-catalyst compounds having a metal belonging to the Groups I to III of the Periodic Table of the elements, the metal being selected e.g. amongst lithium, aluminium, zinc, magnesium and boron. Such co-catalysts are known for use in the polymerisation of olefins and particularly include organo-aluminium compounds, for example, trimethylaluminium, triethylaluminium, diethylaluminium hydride, triisobutyl aluminium, tridecylaluminium, tridodecylaluminium, diethylaluminium methoxide, diethyl aluminium ethoxide, diethyl aluminium phenoxide, diethyl aluminium chloride, ethyl aluminium dichloride and methyl diethoxy aluminium. The co-catalyst can be deposited on the supported catalyst before, during or after the addition of the transition metal complex or can be added to the polymerisation medium along with the catalyst. Preferably the amount of co-catalyst used is up to 1000 e.g. 0.1-1000g atoms of metal per g atom of transition metal of the supported catalyst. More preferably the amount of co-catalyst used is less than 100 most preferably less than 10g atoms of metal per g atom of transition metal.

The olefin polymerisation catalyst according to the present invention can be used to produce polymers using solution polymerisation, slurry polymerisation or gas phase polymerisation techniques. Methods and apparatus for effecting such polymerisation reactions are well known and described in for example, Encyclopaedia of Polymer Science and Engineering published by John Wiley and Sons, 1987, Volume 7, pages 480 to 488 and 1988, Volume 12, pages 504 to 541. The catalyst according to the present invention can be used in similar amounts and under similar conditions to known olefin polymerisation catalyst such as for example the chromocene catalysts or supported chromium oxide catalysts.

The polymerisation is effected by contacting the monomer(s) with a catalytically effective amount of the olefin polymerisation catalyst according to the present invention, in the substantial absence of catalyst poisons, optionally in the presence of hydrogen at a temperature and pressure which are sufficient to initiate polymerisation. Hydrogen or other suitable chain transfer agents may be employed in the polymerisation to control the molecular weight of the produced polyolefin. The amount of hydrogen may be such that the percentage of the partial pressure of hydrogen to that of olefin(s) is from 0.1-200% preferably from 1-50%.

Typically, the temperature is from 30 to 110°C for the slurry or "particle form" process or for the gas phase process. For the solution process the temperature is typically from 100 to 250°C. The pressure used can be selected from a relatively wide range of suitable pressures e.g. from sub atmospheric up to about 6.9 MPa, preferably from 0.05-10 such as 0.14 to 5.5 MPa. In the slurry or particle form process the process is performed with a liquid inert diluent such as a saturated aliphatic hydrocarbon e.g. of 4-10 carbons such as isobutane or an aromatic hydrocarbon liquid such as benzene, toluene or xylene. The polymer is recovered directly from the gas phase process or by filtration or evaporation from the slurry process or evaporation from the solution process.

The invention also includes polymers obtainable by a process using a catalyst according to the present invention.

The catalyst of the present invention in the particular those with the combination of Ti and Cr organometallics described above can have very high activity e.g. greater than 1000g polymer per g of catalyst e.g. 1000-5000 and especially 2000-4500g/g which may be higher than commercial Cr oxide catalysts. The polymers obtainable with the catalyst of the invention can have a Melt Index (according to ASTMD1238 Condition E, 2.16Kg at 190°C) of 0.001-100 e.g. 0.005-3 or 3-80g/10mins and a melt Index (according to ASTM D1238 Condition F, 21.6Kg at 190°C) of 0.1-3000, e.g. 100-2500 but preferably 1-100g/10mins. The Metl Index Ratio, (hereafter MIR) which is the ratio of the Condition F to Condition E Melt Indices, is usually up to 400, for example up to 300, especially up to 100 such as 10-100. The Molecular weight distribution M_{w}/Mₙ is usually 8-50, preferably 10-30 and especially 15-30.

Typical examples of suitable olefin polymerisation catalysts include Ziegler- Natta, chromium and metallocene catalysts including for example unsubstituted or substituted bis(cyclopentadienyl) metallocenes based on Zr, Hf or Ti which may also include monocyclopentadienyl derivatives.

The invention is illustrated in the following Examples 1-4. All catalysts were prepared and stored under conditions which excluded oxygen (air) and water. Melt Indices were determined as described above.

The invention is illustrated in the following Examples 1-4 in which the sodium silicate was Crosfield "Crystal 79" brand and the flame hydrolysed oxides were obtained from Degussa and were as follows:
Titania, sold as P25, of average particle size 30nm.
Alumina, sold as Alumina C, of average particle size 20nm.

### Example A

### Preparation of Support A

An acid and a silicate solution were made as described below.

### Acid Solution

To deionised water (2530ml) was added sulphuric acid (88.4ml, 98%w/w) and then the flame hydrolysed alumina (167g) with stirring and then high shear mixing (10mins) using a Silverson L4R high shear mixer.

### Silicate Solution

To deionised water (2255ml) was added sodium silicate (1018ml), and the solution was then mixed thoroughly.

### Gelling

The silicate solution was then added continuously at 79ml/min to the acid solution, with slow stirring (flat paddle 7cm x 7cm, 1-3RPM low shear mixing) which was continued until mixture was gelled (pH6).

### Ageing and Washing

The gel was aged at room temperature (20°C) for 2 hours, cut into portions (10-30mm diameter) and then washed with a 0.5%wt solution of ammonium nitrate in deionised water until low in sodium (<0.1%wt in final composite) to leave a hydrogel.

### Azeotropic Distillation, Calcination

The hydrogel (1Kg substantially sodium free) was azeotroped with ethyl acetate (21) in a Dean and Stark apparatus until no more water could be collected. The flask contents were then filtered and the solid was vacuum dried, before calcination in flowing air. The rate of temperature rises and calcination profile was as follows:
raise from 50-150°C, at 100°C/h, hold 2h at 150°C,
raise from 150-350°C, at 100°C/h, hold 2h at 350°C and
raise from 350-500°C, at 150°C/h, hold 4h at 500°C.

The product was in the form of composite particles, which were shown by transmission electron microscopy to contain discrete particles of one phase the flame hydrolysed particles in a matrix of a second phase. The product was crushed and sized to give particles of at least 1 micron size, with an average diameter of 50-200 micron, and the discrete particles had a 30 maximum dimension. They had porosity as shown in Table 1.

### Example B

### Preparation of Support B

The process of Example A was repeated with titania instead of alumina.

### Acid Solution

To distilled water (2530ml) was added sulphuric acid (88.4ml, 98%w/w conc) and the flame hydrolysed titania (167g) with stirring and mixing as in Example A. Silicate Solution.

To deionised water (2255ml) was added sodium silicate (1018ml). The solution was then mixed thoroughly.

After gelling, ageing, washing, azeotropic distillation and calcination as in Example A the composite particles produced had porosity as in Table 1. Transmission electron microscopy confirmed their structure with discrete particles of one phase (from the flame hydrolysed particles) in a matrix of another phase. The product was crushed and sized to give particles with an average size of at least 1 micron with an average of 50-200 micron, and the discrete particles had maximum dimension of 40nm.

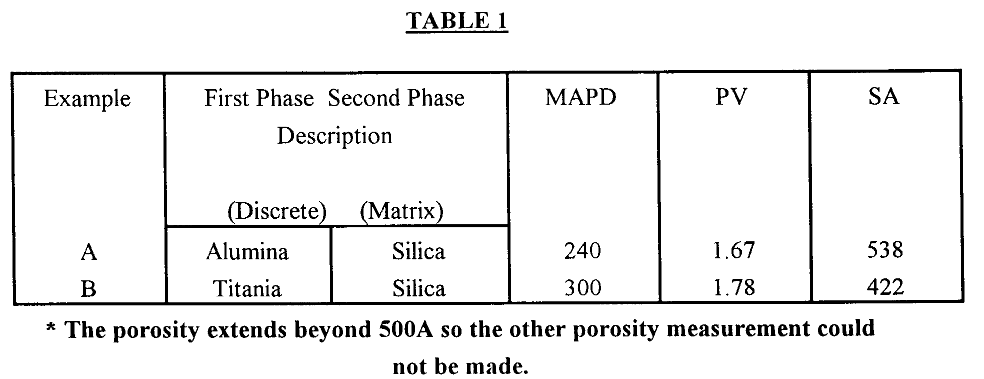

where
- MAPD: = mean average pore diameter (angstom)
- PV: = pore volume (g/ml)
- SA: = surface area (m/g)

### Examples 1 and 2

### (i) Catalyst Preparation

The heat treated support A (5g) was calcined for 3hrs at 650°C and then was placed in a flask, under an atmosphere of dry nitrogen, and a solution of bis (cyclopentadienyl) chromium II(0.75g) dissolved in 20ml 40-60°C petroleum ether was then introduced into the flask with stirring. The slurry obtained was stirred for 30 minutes and then the supernatant liquor was decanted off with a syringe. The solid catalyst residue was washed with 2 x 20ml petroleum ether, with stirring of the catalyst for 5 minutes after each addition and removing the supernatant liquor by syringe to leave a catalyst residue. Titanium tetrabenzyl (0.558g) was then dissolved in 20ml of petroleum ether and the solution obtained added to the catalyst residue. The catalyst slurry obtained was then stirred for 30 minutes after when the solvent was evaporated under vacuum at about 20°C to leave a dry free flowing powder catalyst. The catalyst contained about 1% Cr and 1.3% ti (by weight).

### (ii) Polymerisation of Ethylene

Ethylene was homopolymerised in a 2.3 litre stainless steel reactor by contacting the monomer in the presence of hydrogen with the catalyst suspended in 1.0 litre of isobutane at 90°C under a total pressure of 600 psig (4.14 x 10⁶Nm⁻) for approximately one hour. The hydrogen concentration was as specified in Table 2, as was the activity (g polymer per g catalyst per hr) and productivity. The Melt Index under 2.16Kg (MI) and 21.6Kg (HLMI) load, the Melt Index Ratio (MIR), and the density were determined; the results are shown in the Table 2. The polymer has a very broad bimodal molecular weight distribution.

### Examples 3 and 4

The processes of Example 1/2 were repeated with the support from Example B rather than Example A. The results are given in Table 2. The polymer had a very broad molecular weight distribution.

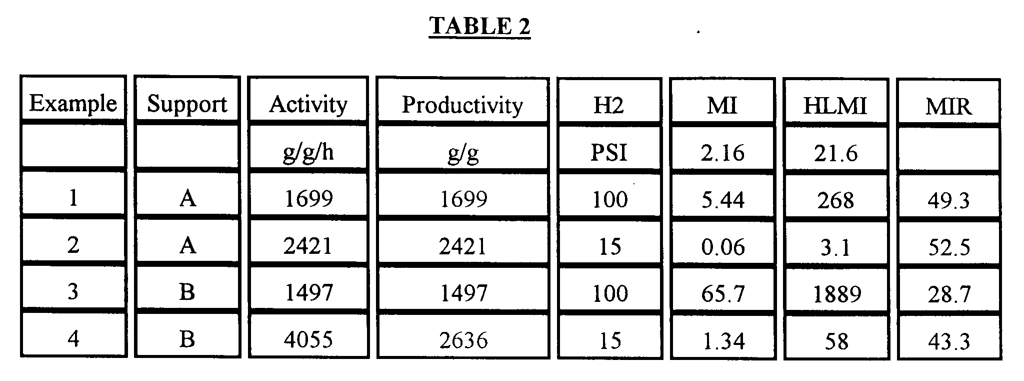

where
- MI: = melt index
- HLMI: = high load melt index
- MIR: = melt index ratio

## Claims

1. A catalyst particle comprising at least one transition metal component characterised in that the catalyst particle further comprises a support comprising (a) discrete particles of a first solid phase comprising a first oxide, said solid phrase being dispersed in (b) at least a second solid phase comprising a second oxide.

2. A catalyst particle according to claim 1 wherein the first oxide is selected from silica, alumina, titania.

3. A catalyst particle according to claim 2 wherein the oxide is flame hydrolysed or fumed.

4. A catalyst particle according to claim 1 wherein the second oxide is silica or alumina.

5. A catalyst particle according to any of the preceding claims having a maximum diameter in the range 5 to 500 micron.

6. A catalyst particle according to any of the preceding claims wherein the discrete particles of the first solid phase have a maximum diameter in the range 1-50 micron.

7. A catalyst particle according to any of the preceding claims having a pore volume of at least 0.5g/mL.

8. A catalyst particle according to any of the preceding claims wherein the transition metal component is impregnated or incorporated into the first solid phase, the second solid phase or into the support.

9. A catalyst particle according to any of the preceding claims wherein the transition metal component is titanium, chromium, vanadium or zirconium.

10. A catalyst particle according to any of the preceding claims wherein the transition metal component is a metallocene.

11. A catalyst particle according to any of the preceding claims wherein the transition metal component is present at an average level of 0. 1-20%.

12. An olefin polymerisation catalyst component comprising catalyst particles as claimed in any of the preceding claims.
